# EUROPÄISCHE PATENTSCHRIFT

(11) **EP 2 011 186 B1**
(45) Veröffentlichungstag und Bekanntmachung des Hinweises auf die Patenterteilung: **23.11.2016**
(21) Anmeldenummer: 07724308.7
(22) Anmeldetag: 17.04.2007
(51) Int. Cl.: H01Q 1/22, H01Q 13/02, H01Q 21/06, G01F 23/284

(54) **PATCHANTENNE MIT KERAMIKSCHEIBE ALS ABDECKUNG**
PATCH ANTENNA WITH A CERAMIC DISC AS BARRIER
ANTENNE À PLAQUE AVEC DISQUE DE CÉRAMIQUE SERVANT DE RECOUVREMENT

(30) Priorität: 27.04.2006 DE 102006019688; 27.04.2006 US 795618 P
(43) Veröffentlichungstag der Anmeldung: 07.01.2009
(73) Patentinhaber: VEGA Grieshaber KG, 77709 Wolfach (DE)
(72) Erfinder: SCHULTHEISS, Daniel, 78132 Hornberg (DE); MOTZER, Jürgen, 77723 Gengenbach (DE); FEHRENBACH, Josef, 7716 Haslach (DE)
(74) Vertreter: Maiwald Patentanwalts GmbH
(86) Internationale Anmeldenummer: PCT/EP2007/003371
(87) Internationale Veröffentlichungsnummer: WO 2007/124860

(56) Entgegenhaltungen:
- EP-A- 0 884 567
- WO-A1-2006/057599
- US-A- 5 507 181
- US-A1- 2003 151 560
- US-A1- 2003 201 946

## Beschreibung

### Verwandte Anmeldungen

Die vorliegende Anmeldung beansprucht die Priorität der US Provisional Patentanmeldung Nr. 60/795,618, eingereicht am 27. April 2006 und der deutschen Patentanmeldung Nr.: 10 2006 019 688.0, eingereicht am 27. April 2006.

### Technisches Gebiet

Die vorliegende Erfindung betrifft die Füllstandmessung. Insbesondere betrifft die vorliegende Erfindung eine planare Antenne mit einer Prozesstrennung für ein Füllstandradar, ein Füllstandradar mit einer planaren Antenne und die Verwendung einer derartigen planaren Antenne zur Füllstandmessung.

### Hintergrund der Erfindung

In der Füllstandmesstechnik gibt es zahlreiche Anwendungen, bei denen eine hohe Temperatur bzw. ein hoher Druck vorhanden ist. Die Prozesstemperatur kann beispielsweise bis zu 400°C betragen. Der Druck kann einen Wert bis zu 160 bar oder mehr aufweisen.

Um in diesen Anwendungen mit Radarsensoren den Füllstand messen zu können, müssen die Prozessanschlüsse, also die Antennen, so konstruiert sei, dass sie diese Temperatur bzw. diesen Druck unbeschadet aushalten. Dazu werden üblicherweise Materialien wie Keramik, Glas oder Edelstahl verwendet.

Kunststoffe, die in bekannten Sensoren als Antennenfüllungen bzw. Abdichtungen Anwendung finden, halten vor allem den hohen Temperaturen nicht stand. Bei diesen Kunststoffen handelt es sich beispielsweise um Poly-Tetra-Fluor-Ethylen (PTFE) oder Poly-Esther-Esther-Keton (PEEK).

Will man diese Kunststoffe durch Keramik oder Glas ersetzen, so gelingt dies aufgrund der hohen Dielektrizitätskonstanten εᵣ der Keramik und des Glases gerade bei höheren Sendefrequenzen des Radarsensors nicht ohne weiteres.

Zum einen werden die Abmessungen sehr klein und zum anderen verschlechtert sich das HochfrequenzVerhalten durch den großen Unterschied εᵣ und umgebender Luft.

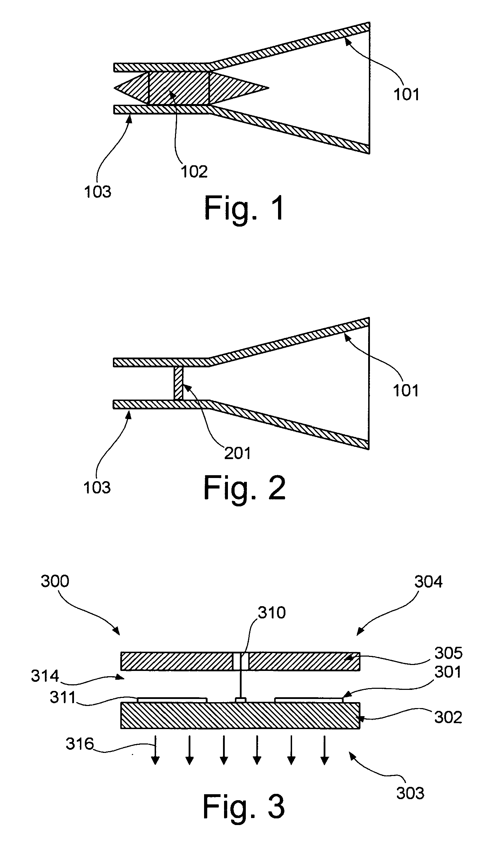

Bereits bei Frequenzen um 6 GHz bereitet dies Probleme und kann besonders im Nahbereich die Empfindlichkeit eines Sensors erheblich verringern. In Fig. 1 ist ein solcher Sensor dargestellt.

Eine weitere Möglichkeit der Prozesstrennung besteht in der Verwendung einer Keramikscheibe als Fenster in einem Hohlleiter. Dabei wird eine Scheibe mit einer Dicke der halben Wellenlänge der Sendefrequenz (oder ganze Vielfache davon) als "Fenster" in den Hohlleiter eingesetzt. Dies ist in Fig. 2 dargestellt. Die Reflexion durch das hohe εᵣ der Scheibe ist aber so groß, dass auch hier die Empfindlichkeit durch mehrfache Reflexionen im Nahbereich stark reduziert werden kann.

Die US 2003/0151560 Albetrifft ein Antennensystem für ein Niveaumessgerät zum Abstrahlen von Mikrowellen durch ein Antennenhorn. Hochfrequenz-Energie in der Form von Mikrowellensignalen kann von einem Strahlerelement abgestrahlt werden, das einer Schutzplatte am Ende des Horns gegenüberliegend angeordnet ist.

Die US 5,507,181 betrifft ein Anbringsystem und ein Verfahren zum Koppeln eines Mikrowelleninstruments an einen Behälterflansch. Ein für Mikrowellen durchlässiges Fenster verschließt ein Antennenhorn des Mikrowelleninstruments.

Die EP 0 884 567 betrifft ein System zum Erfassen von Füllstanden mit einer dielektrischen Linse zum Fokussieren von Mikrowellen.

Die US 2003/0201946 A1 betrifft eine Antennenkomponentenkombination mit einer Anordnung von metallischen Antennenrezeptoren, die von einem flexiblen wasserfesten Beutel umgeben sind.

Die WO 2006/057599 A1 betrifft ein Antennengerät zum Bestimmen eines Füllstands in einem Behälter, das eine schützende dielektrische Abdeckung umfasst, die die Abstrahlfläche des Antennengeräts bedeckt.

### Zusammenfassung der Erfindung

Es ist eine Aufgabe der vorliegenden Erfindung, eine planare Antenne mit verbesserter Prozesstrennung anzugeben.

Die Aufgabe wird erfindungsgemäß entsprechend den im Anspruch 1 angegebenen Merkmalen gelöst.

Gemäß einem weiteren Ausführungsbeispiel der vorliegenden Erfindung ist die Prozesstrennung als Keramikscheibe oder als Glasscheibe ausgeführt.

Sowohl Keramik als auch Glas halten erhöhten Temperaturen als auch Drücken stand, ohne dabei Schaden zu nehmen.

Das planare Strahlerelement kann beispielsweise in Form einer strukturierten Metallisierung auf der Rückseite der scheibenförmigen Prozesstrennung ausgeführt sein. Gemäß einem weiteren Ausführungsbeispiel der vorliegenden Erfindung weist die Prozesstrennung eine Dicke auf, die einem ganzzahligen Vielfachen der halben Wellenlänge des elektromagnetischen Sendesignals entspricht.

Hierdurch können Verluste oder Störungen des Sendesignals, welche von der Prozesstrennung herrühren, verringert werden.

Gemäß einem weiteren Ausführungsbeispiel der vorliegenden Erfindung weist die Antenne ein Gehäuse auf und mehrere Dichtringe, welche eine Abdichtung zwischen dem umlaufenden Rand, der Prozesstrennung und dem Gehäuse bereitstellen.

Auf diese Weise wird eine einfach herzustellende aber trotzdem sehr robuste Antennenanordnung bereitgestellt, welche eine Prozesstrennung auch bei hohen Druckunterschieden gewährleistet.

Gemäß einem weiteren Ausführungsbeispiel der vorliegenden Erfindung sind die Dichtringe als Graphitringe ausgeführt. Graphit eignet sich ganz besonders gut zur Abdichtung der Prozesstrennung, da Graphitringe die Spalte zwischen den zu dichtenden Teilen aufgrund ihrer Komprimierbarkeit nahezu vollständig auffüllen und darüber hinaus auch noch leitfähig sind und dadurch auch elektrische Verbindungen sicherstellen können. Bei üblichen Dichtringen aus Elastomeren entstehen dieelektrisch gefüllte Räume, die die Ausbreitung von Hochfrequenz behindern können. Des weiteren ist Graphit äußerst beständig gegen hohe Temperaturen und gegen eine Vielzahl von Chemikalien.

Gemäß einem weiteren Ausführungsbeispiel der vorliegenden Erfindung weisen die Dichtringe jeweils eine Breite auf, die der halben Wellenlänge des elektromagnetischen Sendesignals entspricht.

Dies führt dazu, dass der Kurzschluss am Ende der aus den der Prozesstrennung zugewandten Flächen der Graphitringe und des Gehäuses gebildeten "Stichleitung" mit einer Länge von λ/2 (also der halben Wellenlänge) zu einem Quasikurzschluss an der Seitenwand reflektiert wird und somit der Einstich in die Außenwand als nicht vorhanden erscheint.

Gemäß einem weiteren Ausführungsbeispiel der vorliegenden Erfindung ist der umlaufende Rand im Innenbereich der Antenne als Metallring ausgeführt, wobei die Prozesstrennung in den Metallring eingeschmolzen, eingesintert oder eingeschrumpft ist.

Gemäß einem weiteren Ausführungsbeispiel der vorliegenden Erfindung ist ein kegelförmiger Ansatz an der scheibenförmigen Prozesstrennung vorgesehen, um ein Abtropfen einer Flüssigkeit zu begünstigen.

Auf diese Weise kann ein Verschmutzen des Außenbereichs der Prozesstrennung verringert werden.

Gemäß einem weiteren Ausführungsbeispiel der vorliegenden Erfindung ist zumindest ein weiteres planares Strahlerelement vorgesehen, das zusammen mit dem ersten Strahlerelement eine Patchantenne ausbildet.

Es handelt sich hierbei also um zwei oder eine ganze Vielzahl von planaren Strahlerelementen, welche auf der Rückseite der Prozesstrennung angeordnet sind und gemeinsam das Sendesignal erzeugen.

Als Strahlerelemente eignen sich alle bekannten Formen, wie Rechteck, Dreieck oder Kreis.

Gemäß einem weiteren Ausführungsbeispiel der vorliegenden Erfindung umfasst die planare Antenne ein Antennenhorn, das im Außenbereich der planaren Antenne angeordnet ist, wobei die planaren Strahlerelemente elektrisch miteinander verbunden sind, so dass sie ein Array ausbilden.

Gemäß einem weiteren Ausführungsbeispiel der vorliegenden Erfindung umfasst die planare Antenne weiterhin einen Hohlleiter, der im Außenbereich der planaren Antenne angeordnet ist, wobei die planaren Strahlerelemente und der Hohlleiter derart zusammenwirken, dass bei Betrieb der planaren Antenne ein Einkoppeln eines elektromagnetischen Sendesignals in den Hohlleiter erfolgt.

An den Hohlleiter kann dann beispielsweise wieder eine Antenne angeschlossen werden.

Gemäß einem weiteren Ausführungsbeispiel der vorliegenden Erfindung ist ein Füllstandradar zur Bestimmung eines Füllstands in einem Tank angegeben, das Füllstandradar umfassend eine planare Antenne, wie sie oben beschrieben ist. Weiterhin ist die Verwendung einer oben beschriebenen planaren Antenne zur Füllstandmessung angegeben.

Weitere Ausführungsbeispiele und Vorteile der Erfindung ergeben sich aus den Unteransprüchen.

### Kurze Beschreibung der Zeichnungen

Im Folgenden werden mit Verweis auf die Figuren bevorzugte Ausführungsbeispiele der vorliegenden Erfindung beschrieben.
Fig. 1 zeigt eine schematische Darstellung einer Hornantenne mit Anpasskegel aus Dielektrikum.
Fig. 2 zeigt eine schematische Darstellung einer Hornantenne mit einem Fenster aus Dielektrikum.
Fig. 3 zeigt eine schematische Darstellung von einem Strahlerelement für eine planare Antenne gemäß einem Ausführungsbeispiel der vorliegenden Erfindung.
Fig. 4 zeigt eine schematische Darstellung einer planaren Antenne gemäß einem Ausführungsbeispiel der vorliegenden Erfindung.
Fig. 5 zeigt eine schematische Darstellung von einem Strahlerelement für eine planare Antenne gemäß einem weiteren Ausführungsbeispiel der vorliegenden Erfindung.
Fig. 6 zeigt eine schematische Darstellung von einem Strahlerelemente-Array für eine planare Antenne gemäß einem weiteren Ausführungsbeispiel der vorliegenden Erfindung.
Fig. 7 zeigt eine planare Antenne mit einem Antennenhorn gemäß einem Ausführungsbeispiel der vorliegenden Erfindung.
Fig. 8 zeigt eine planare Antenne mit einem Hohlleiter gemäß einem Ausführungsbeispiel der vorliegenden Erfindung.
Fig. 9 zeigt eine schematische Darstellung eines Füllstandradars gemäß einem Ausführungsbeispiel der vorliegenden Erfindung.
Fig. 10 zeigt eine schematische Darstellung einer planaren Antenne gemäß einem weiteren Ausführungsbeispiel der vorliegenden Erfindung mit kegelförmiger Aussparung 1001.

Die Darstellungen in den Figuren sind schematisch und nicht maßstäblich.

### Detaillierte Beschreibung von exemplarischen Ausführungsformen

In der folgenden Figurenbeschreibung werden für die gleichen oder ähnlichen Elemente die gleichen Bezugsziffern verwendet.

Fig. 1 zeigt eine schematische Darstellung einer Hornantenne 101 mit einem Anpasskegel 102 aus Dielektrikum. Das elektromagnetische Sendesignal wird hierbei über den Hohlleiter 103 und den Anpasskegel 102 in die Hornantenne 101 eingeleitet und dann zum Füllgut abgestrahlt. Soll der Anpasskegel aus Dielektrikum 102 als Prozesstrennung für hohe Temperaturen und hohe Drücke ausgeführt sein, muss er eine entsprechende Temperaturbeständigkeit und Druckresistenz aufweisen. Er darf somit nicht aus Kunststoff ausgeführt sein, welcher bei erhöhten Temperaturen schmelzen würde. Führt man den Anpasskegel 102 allerdings aus temperaturbeständigen Materialien, wie Keramik oder Glas aus, können Probleme bei der Signalübertragung aufgrund der hohen Dielektrizitätskonstanten der Materialien Keramik oder Glas auftreten. Hierdurch kann sich das Hochfrequenz-Verhalten verschlechtern. Weiterhin müssen die Abmessungen entsprechend klein gewählt werden.

Fig. 2 zeigt eine schematische Darstellung einer Hornantenne 101 mit einem Hohlleiter 103 und einem Fenster 201 aus Dielektrikum als Prozesstrennung. Aufgrund der hohen Dielektrizitätskonstante des Fensters 201 entstehen starke Reflexionen, so dass die Empfindlichkeit der Antennenanordnung durch Mehrfachreflexionen im Nahbereich stark reduziert wird.

Fig. 3 zeigt eine schematische Darstellung von einem Strahlerelement für eine planare Antenne 300 gemäß einem Ausführungsbeispiel der vorliegenden Erfindung. Die planare Antenne 300 weist eine Keramikschreibe 302 als Prozesstrennung auf. Auf der Rückseite der Keramikscheibe 302 sind planare Strahlerelemente 301, 311 in Form einer strukturierten Metallisierung aufgebracht. Weiterhin ist eine metallische Rückwand 305 vorgesehen. Auf die Keramik- oder Glasscheibe 302 ist also eine planare Antennenstruktur 301, 311 aufgebracht. Diese Struktur besteht aus einem leitfähigen Material und kann ein einzelner Patchstrahler 301 oder ein Array aus mehreren Einzelpatches 301, 311 sein. Die Strahlerelemente 301, 311 erzeugen ein elektromagnetisches Sendesignal 316 mit einer Wellenlänge λ, das durch die Scheibe 302 zum Füllgut abgestrahlt wird. Die Metallisierung befindet sich aus Gründen der chemischen Beständigkeit sowie besserer Hochfrequenz-Eigenschaften auf der vom Prozess abgewandten Seite 304. Als Massefläche für die Patchstruktur dient eine beabstandete Metallwand 305. Zwischen der Massefläche 305 und der Struktur 301, 311 auf der Keramikscheibe 302 befindet sich ein Gas (z. B. Luft) oder ein Vakuum, da durch die niedrige Dielektrizitätskonstante des Gases bzw. des Vakuums die Bandbreite der Antenne 300 ein Maximum erhält.

Die Keramikscheibe 302 weist zur Minimierung der Störung eine Dicke von N x λ/2 (N = 1, 2, 3, 4 ....) auf.

Dieser Aufbau bietet einige Vorteile, wie z. B. hohe Temperaturbelastbarkeit, hohe chemische Resistenz bei Verwendung hochwertiger Keramik und hohe Druckbelastbarkeit.

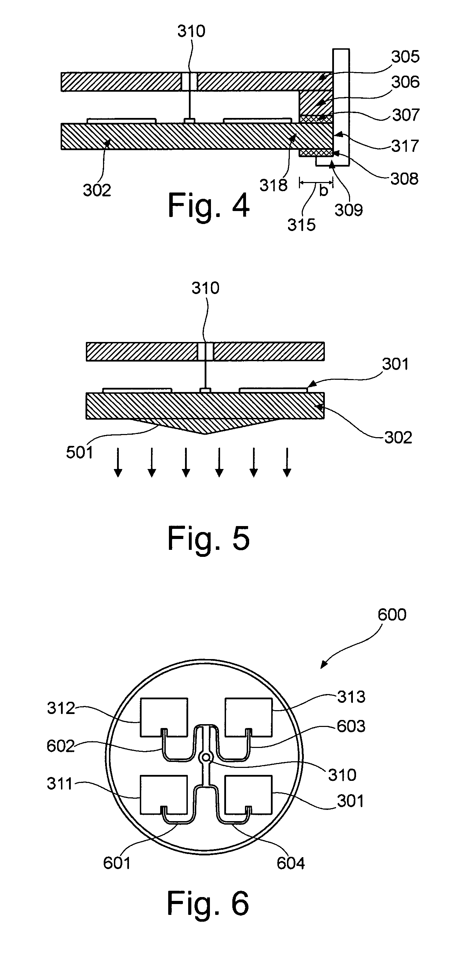

Fig. 4 zeigt eine schematische Darstellung einer planaren Antenne gemäss einem Ausführungsbeispiel der vorliegenden Erfindung.

Die Abstützung der Scheibe 302 gegen den Druck erfolgt gemäss der vorliegenden Erfindung über ein umlaufender Rand oder Auflagering 306 an der Rückwand der Glas- oder Keramikscheibe 302. Dieser Auflagering 306 stellt eine ringförmige Auflage für die Scheibe 302 bereit.

Die Abdichtung zwischen diesem Rand 306, der Scheibe 302 und dem Gehäuse 309 erfolgt beispielsweise mit zwei Graphitringen 307, 308, die vor und hinter der Scheibe 302 angebracht sind. Die notwendige Kraft für die Vorspannung der Graphitringe 307, 308 kann durch ein Gewinde zwischen Rückwand und Gehäuse 309 aufgebracht werden.

Für die Breite b 315 der Graphitringe 307, 308 wählt man beispielsweise die Hälfte der Wellenlänge λ der zu übertragenden Frequenz. Dies führt dazu, dass der Kurzschluss 317 am Ende der aus den der Keramik zugewandten Flächen der Graphitringe und des Gehäuses 309 gebildeten "Stichleitung" mit der Länge b = λ/2 zu einem Quasikurzschluss 318 an der Seitenwand reflektiert wird, und somit der Einstich in die Außenwand als nicht vorhanden erscheint.

Weitere Möglichkeiten der Abdichtung der Scheibe 302 bieten die folgenden Verfahren:
- Einschmelzen in einen Metallring (z. B. bei Glas);
- Einsintern in einen Metallring (z. B. bei Keramik); und
- Einschrumpfen in einen Metallring.

Das so entstandene Bauteil kann anschließend beispielsweise an weitere Metallteile angeschweißt werden.

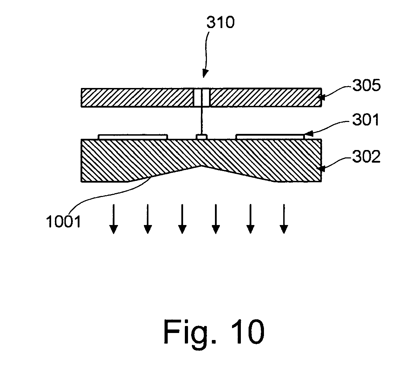

Fig. 5 zeigt eine schematische Darstellung von einem Strahlerelement für eine planare Antenne gemäß einem weiteren Ausführungsbeispiel der vorliegenden Erfindung. Um ein besseres Abtropfverhalten an der Glas- bzw. Keramikscheibe 302 zu erhalten, kann zusätzlich ein kegelförmiger Ansatz 501 an die Scheibe 302 angebracht werden. Bildet sich in diesem Fall an der Unterseite der Scheibe Kondensat, so kann es an der Schräge zur Mitte hin abfließen und, wenn sich genügend angesammelt hat, dort abtropfen. Der kegelförmige Ansatz 501 kann auch umgekehrt ausgeführt sein, so dass sich das Kondensat am äußeren Ring sammelt. Die Keramikscheibe 302 kann ebenso eine kegelförmige Aussparung 1001 an der zum Prozess zugewandten Seite haben, wodurch das Kondensat zum äußeren Ring der Keramikscheibe 302 hin ablaufen kann. Dies ist in Fig. 10 dargestellt.

Der Hochfrequenz-Anschluss zu einem Mikrowellenmodul (nicht dargestellt in den Figuren) erfolgt gemäss der vorliegenden Erfindung über einen koaxialen Eingang 310. In diesem koaxialen Anschluss 310 ist eine Glaseinschmelzung eingebracht, die eine sichere Zonentrennung in einem explosionsgefährdeten Bereich darstellt. Dazu wird zwischen Innen- und Außenleiter ein Glaskörper von beispielsweise 3 mm Länge eingeschmolzen.

Die Strukturen auf der Glas- oder Keramikscheibe 302 können entweder in Dünnschichttechnik oder als Siebdruck in Dickschichttechnik aufgebracht werden.

Aus dem obigen Ausführungsbeispiel lassen sich verschiedene Möglichkeiten zur Realisierung einer Antenne für Füllstandanwendungen ableiten:

### Reine Planarantenne

Die rein planare Ausführung ist bei Anwendungen mit hoher Druckbeaufschlagung in der Größe begrenzt, da die Keramikscheibe möglichst dünn gehalten werden sollte, um diese mit der Hochfrequenz gut durchstrahlen zu können. Diese Ausführungsform eignet sich insbesondere für Anwendungen, bei denen entweder bei hoher Temperatur nur wenig Druck erwartet wird oder aber ein großer Öffnungswinkel bzw. ein kleiner Antennengewinn ausreicht. Der Aufbau kann hier entsprechend dem in Fig. 4 dargestellten Aufbau erfolgen.

Die Struktur auf der Keramikscheibe besteht dabei aus mehreren einzelnen Strahlerelementen 301, 311, die zusammen eine Patchantenne bilden. Als Strahlerelemente eignen sich alle bekannten Formen, wie Rechteck, Dreieck oder Kreis. Insbesondere werden rechteckige Strahlerelemente eingesetzt.

### Anregung einer Hornantenne

Ein weiteres Ausführungsbeispiel ist die Verwendung der planaren Antenne zur Anregung einer Hornantenne. Dazu wird eine kleine Anzahl von Einzelstrahlern 301, 311, 312, 313 zu einem Array kombiniert, wie in Fig. 6 dargestellt. Die Einzelstrahler 301, 311, 312, 313 sind über entsprechende Leitungen 601, 602, 603, 604 mit dem Hochfrequenz-Anschluss 310 verbunden. Das gesamte Array 600 wird nach obigen Angaben aufgebaut.

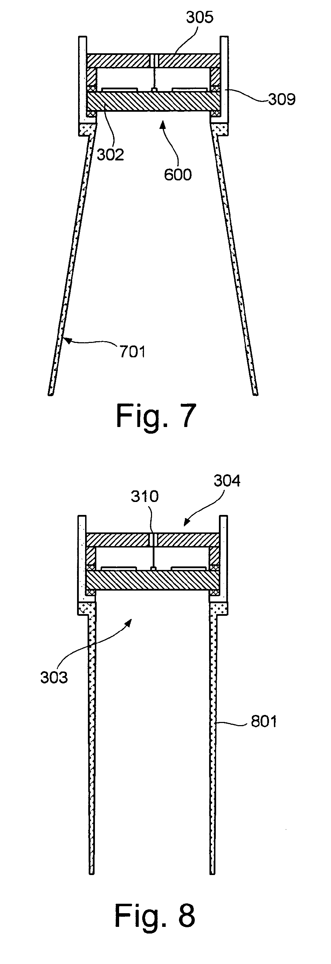

Die Anordnung 600 wird dann entsprechend Fig. 7 in eine Hornantenne 701 eingebaut.

Ein Vorteil dieser Anordnung besteht darin, dass die Keramikscheibe 302 relativ klein gehalten werden kann und bei gleicher Dicke einem höheren Druck standhält. Des weiteren lässt sich durch Verändern der Horngröße der Antennengewinn und der Öffnungswinkel der gesamten Anordnung verändern, wobei der Einkoppelbereich mit der Patchantenne immer gleich bleibt.

### Als Erreger in einem Hohlleiter

Die gleiche Anordnung wie in Fig. 7 kann auch in einen Hohlleiter 801 eingebaut werden und dient somit als Übergang von der Koaxialleitung (HochfrequenzAnschluss 310) auf den Hohlleiter 801. Dies ist in Fig. 8 dargestellt. An den Hohlleiter 801 kann dann beispielsweise wiederum eine Hornantenne angeschlossen werden.

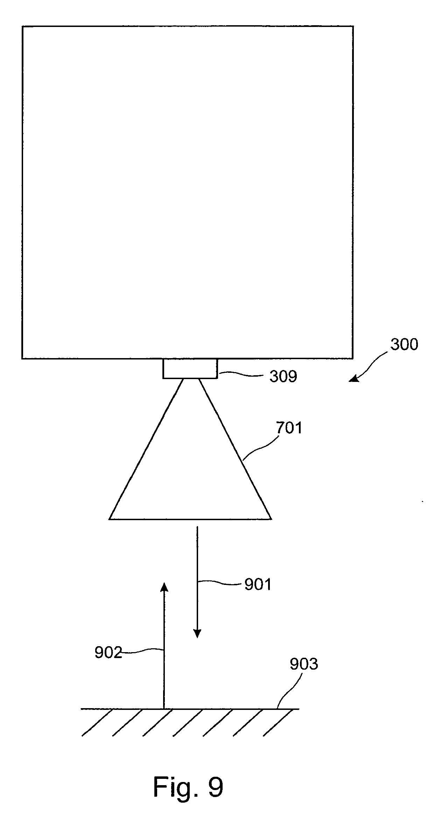

Fig. 9 zeigt eine schematische Darstellung eines Füllstandradars gemäß einem weiteren Ausführungsbeispiel der vorliegenden Erfindung.

Das Füllstandradar weist hierbei eine planare Antenne 300 mit einem Antennenhorn 701 auf. Die Antenne 300 ist zum Aussenden elektromagnetischer Strahlen 901 zu einer Füllgutoberfläche 903 und zum Empfangen auf der Füllgutoberfläche 903 reflektierter elektromagnetischer Strahlen 902 ausgeführt.

Durch die Ausführung der Antenne als Patchantenne mit Keramikscheibe als Abdeckung kann eine hohe Temperaturbeständigkeit des gesamten Antennensystems und der Einkopplung durch Verwendung von Materialien wie Keramik, Graphit, Metalle erreicht werden. Weiterhin ist eine hohe Druckbelastbarkeit der Keramik- bzw. Glasscheibe gewährleistet. Weiterhin ist eine hohe chemische Beständigkeit der Antenne und eine Zonentrennung für Explosionsschutz durch eine Glaseinschmelzung im Bereich der koaxialen Durchführung gegeben.

## Patentansprüche

1. Planare Antenne mit einer Prozesstrennung für ein Füllstandradar zum Messen eines Füllstands, die planare Antenne (300) umfassend:
ein planares Strahlerelement (301) zum Abstrahlen eines elektromagnetischen Sendesignals zu einem Außenbereich (303) der Antenne (300);
eine dielektrische, scheibenförmige Prozesstrennung (302) zum Trennen des Außenbereichs (303) der Antenne unterhalb der Prozesstrennung von einem Innenbereich (304) der Antenne (300) oberhalb der Prozesstrennung;
eine Metallwand (305) als Massefläche (305) für das planare Strahlerelement (301), wobei die Metallwand (305) beabstandet zum planaren Strahlerelement (301) angeordnet ist; und
einen als koaxialer Eingang ausgeführten Hochfrequenzanschluss (310), der einen Innenleiter und einen Außenleiter aufweist und eine Durchführung durch die Metallwand (305) bildet, wobei die Metallwand als Außenleiter dient;
zum Verbinden mit einem Mikrowellenmodul;
**dadurch gekennzeichnet, dass**
- ein umlaufender Rand (306) im Innenbereich (304) der Antenne zwischen der Prozesstrennung (302) und der Metallwand, zur Abstützung der Prozesstrennung (302) gegen Druck, vorgesehen ist;
- das planare Strahlerelement innerhalb des besagten umlaufenden Randes (306), auf die zur Metallwand (305) zugewandten Rückseite der scheibenförmigen Prozesstrennung (302) aufgebracht ist;
- sich innerhalb des umlaufenden Randes (306) zwischen der Metallband (305) und der Prozesstrennung (302) bzw. zwischen der Metallwand (305) und dem planaren Strahlerelement (301) Gas oder ein Vakuum befindet, und
- eine Glaseinschmelzung in dem Hochfrequenzanschluss (310) im Bereich der koaxialen Durchführung zwischen dem Innenleiter und dem Außenleiter vorgesehen ist, die eine Zonentrennung für Explosionsschutz darstellt.

2. Planare Antenne nach Anspruch 1,
wobei die Prozesstrennung (302) als Keramikscheibe oder als Glasscheibe ausgeführt ist.

3. Planare Antenne nach einem der vorhergehenden Ansprüche,
wobei die Prozesstrennung (302) eine Dicke aufweist, die einem ganzzahligen Vielfachen der halben Wellenlänge des elektromagnetischen Sendesignals entspricht.

4. Planare Antenne nach einem der vorhergehenden Ansprüche, weiterhin umfassend:
ein Gehäuse (309); und
einen ersten Dichtring (307) und einen zweiten Dichtring (308) zum Bereitstellen einer Abdichtung zwischen dem umlaufenden Rand (306), der Prozesstrennung (302) und dem Gehäuse (309).

5. Planare Antenne nach Anspruch 4,
wobei die Dichtringe (307, 308) jeweils eine Breite aufweisen, die der halben Wellenlänge des elektromagnetischen Sendesignals entspricht.

6. Planare Antenne nach einem der Ansprüche 1 bis 3,
wobei der umlaufende Rand (306) im Innenbereich (304) der Antenne als Metallring ausgeführt ist;
wobei die Prozesstrennung (302) in den Metallring eingeschmolzen, eingesintert oder eingeschrumpft ist.

7. Planare Antenne nach einem der vorhergehenden Ansprüche,
wobei zumindest ein weiteres planares Strahlerelement (311, 312, 313) vorgesehen ist, das zusammen mit dem ersten Strahlerelement (301) eine Patchantenne ausbildet; und
wobei die planaren Strahlerelemente (301, 311, 312, 313) elektrisch miteinander verbunden sind, so dass sie ein Array ausbilden.

8. Füllstandradar (900) zur Bestimmung eines Füllstands in einem Tank, das Füllstandradar (900) umfassend:
eine planare Antenne (100) nach einem der Ansprüche 1 bis 7.

9. Verwendung einer planare Antenne (100) nach einem der Ansprüche 1 bis 7 zur Füllstandmessung.

## Claims

1. A planar antenna comprising a process separation device for a fill level radar for measuring a fill level, with the planar antenna (300) comprising:
a planar radiator element (301) for radiating an electromagnetic transmission signal to an exterior region (303) of the antenna (300);
a dielectric, plate-shaped process separation device (302) for separating the exterior region (303) of the antenna, underneath of the process separation device, from an interior region (304) of the antenna (300), above the process separation device;
a metal wall (305) as ground surface (305) for the planar radiation element (301), wherein the metal wall (305) is arranged at a distance from the planar radiation element (301); and
high-frequency connection (310) in form of a coaxial input, which comprises an inner conductor and an external conductor and which forms a feedthrough trough the metal wall (305), wherein the metal wall serves as the external conductor for connecting with a microwave module;
**characterized in that**:
- a circumferential rim (306) in the interior region (304) of the antenna is provided between the process separation device (302) and the metal wall, to support to the process separation device (302) against pressure;
- a planar radiation element within the said circumferential rim (306) is plated on the metal wall (305) facing backside of the plate-shaped process separation device (302);
- within the circumferential rim (306) between the metal wall (305) and the process separation device (302) respectively between the metal wall (305) and the planar radiation element (301) is a gas or vacuum; and
- a melted-in glass seal is provided in the high-frequency connection (310) at the area of the coaxial feedthrough between the inner conductor and the external conductor, that represents a safe zone separation in a potentially explosive area.

2. The planar antenna of claim 1,
wherein the process separation device (302) is a ceramic plate or a glass plate.

3. The planar antenna of any of the preceding claims,
wherein the process separation device (302) comprises a thickness which corresponds to an integral multiple of half the wavelength of the electromagnetic transmission signal.

4. The planar antenna of any of the preceding claims, further comprising
a housing (309); and
a first sealing ring (307) and a second sealing ring (308) to provide a seal between the circumferential rim (306), the process separation device (302) and the housing (309).

5. The planar antenna of claim 4,
wherein in each instance the width of the sealing rings (307, 308) corresponds to half the wavelength of the electromagnetic transmission signal.

6. The planar antenna of claim any of claim 1 to 3,
wherein the circumferential rim (306) in the interior region (304) of the antenna is a metal ring;
wherein the process separation device (302) is melted, sintered or shrunk into the metal ring.

7. The planar antenna of any of the preceding claims,
wherein at least one further planar radiator element (311, 312, 313) is provided, which together with the first radiator element (301) forms a patch antenna; and
wherein the planar radiator elements (301, 311, 312, 313) are electrically interconnected so that they form an array.

8. A fill level radar (900) for determining a fill level in a tank, with the fill level radar (900) comprising:
a planar antenna (100) of any of claims 1 to 7.

9. The use of a planar antenna (100) of any of claims 1 to 7 for fill level measuring.

## Revendications

1. Antenne planaire avec une séparation de flux pour un radar de niveau destiné à la mesure d'un niveau, l'antenne planaire (300) comprenant :
un élément rayonnant planaire (301) pour l'émission d'un signal émetteur électromagnétique en direction d'une zone extérieure (303) de l'antenne (300) ;
une séparation de flux (302) diélectrique, en forme de disque, pour séparer la zone extérieure (303) de l'antenne au-dessous de la séparation de flux d'une zone intérieure (304) de l'antenne (300) au-dessus de la séparation de flux ;
une paroi métallique (305) en tant que surface de masse (305) pour l'élément rayonnant planaire (301), la paroi métallique (305) étant disposée à distance de l'élément rayonnant planaire (301) ; et
un raccord haute fréquence (310) réalisé sous forme d'entrée coaxiale, qui présente un conducteur intérieur et un conducteur extérieur et forme une traversée au travers de la paroi métallique (305), la paroi métallique servant de conducteur extérieur ; pour la liaison avec un module hyperfréquence ;
**caractérisée en ce que**
- il est prévu un bord périphérique (306) dans la zone intérieure (304) de l'antenne entre la séparation de flux (302) et la paroi métallique, pour étayer la séparation de flux (302) contre la pression ;
- l'élément rayonnant planaire est appliqué à l'intérieur dudit bord périphérique (306), sur le côté arrière, tourné vers la paroi métallique (305), de la séparation de flux (302) en forme de disque ;
- du gaz ou du vide se situe à l'intérieur du bord périphérique (306), entre la paroi métallique (305) et la séparation de flux (302) et/ou entre la paroi métallique (305) et l'élément rayonnant planaire (301) ; et
- une fusion de verre est prévue dans le raccord haute fréquence (310) dans la zone de la traversée coaxiale entre le conducteur intérieur et le conducteur extérieur, laquelle fusion constitue une séparation de zone pour la protection contre les explosions.

2. Antenne planaire selon la revendication 1,
la séparation de flux (302) étant réalisée sous forme de disque céramique ou de disque de verre.

3. Antenne planaire selon l'une des revendications précédentes,
la séparation de flux (302) présentant une épaisseur, qui correspond à un multiple entier de la demi longueur d'onde du signal émetteur électromagnétique.

4. Antenne planaire selon l'une des revendications précédentes, comprenant en outre :
un boîtier (309) ; et
une première bague d'étanchéité (307) et une seconde bague d'étanchéité (308) pour fournir une étanchéité entre le bord périphérique (306), la séparation de flux (302) et le boîtier (309).

5. Antenne planaire selon la revendication 4,
les bagues d'étanchéité (307, 308) présentant chacune une largeur, qui correspond à la demi longueur d'onde du signal émetteur électromagnétique.

6. Antenne planaire selon l'une des revendications 1 à 3,
le bord périphérique (306) étant réalisé sous forme de bague métallique dans la zone intérieure (304) de l'antenne ;
la séparation de flux (302) étant fondue, frittée ou rétractée dans la bague métallique.

7. Antenne planaire selon l'une des revendications précédentes,
au moins un autre élément rayonnant planaire (311, 312, 313) étant prévu, lequel forme une antenne patch avec le premier élément rayonnant (301) ; et
les éléments rayonnants planaires (301, 311, 312, 313) étant repliés électriquement entre eux, de sorte qu'ils forment un système d'antennes.

8. Radar de niveau (900) pour la détermination d'un niveau dans un réservoir, le radar de niveau (900) comprenant :
une antenne planaire (100) selon l'une des revendications 1 à 7.

9. Utilisation d'une antenne planaire (100) selon l'une des revendications 1 à 7 pour la mesure de niveau.
